# EUROPEAN PATENT APPLICATION

(11) **EP 3 355 000 A1**
(43) Date of publication of application: **01.08.2018**
(21) Application number: 16848187.7
(22) Date of filing: 08.09.2016
(51) Int. Cl.: F24J 2/42, F24J 2/26, E04H 4/14

(54) **EQUIPMENT FOR CLIMATISING SWIMMING POOL WATER**

(30) Priority: 25.09.2015 ES 201500674 U
(71) Applicant: Rivero Perez, Eusebio Fidel, 35110 Las Palmas (ES)
(72) Inventor: Rivero Perez, Eusebio Fidel, 35110 Las Palmas (ES)
(74) Representative: Del Valle Valiente, Sonia
(86) International application number: PCT/ES2016/070633
(87) International publication number: WO 2017/051045

(57) **Abstract**

EQUIPMENT FOR CLIMATIZING SWIMMING POOL WATER comprising at least one solar collector (2) with a pipe circuit (3) for circulating the water of the swimming pool (4), a force pump (5) for said circulation, an electronic controller (6) that regulates the actuation thereof, and a first temperature sensor (7) that activates the controller (6), thereby actuating the pump (5). Each collector (2) is a panel formed by an aluminum frame (8) that encloses a lower aluminum sheet (9) and an upper plywood plate (10), which is joined to a sheet of tempered solar glass (11), the pipe circuit (3) being housed therebetween on a glass wool insulating filling (12), an inlet (13) and an outlet (14) of the pipe circuit (3) being located in respective pass-pipe gaskets (15).

## Description

### OBJECT OF THE INVENTION

The invention, as expressed in the title of the present specification, relates to equipment for climatizing swimming pool water that brings novel advantages and characteristics to the operations for which it is intended, which will be described in detail further on and which imply an improvement of the current state of the art.

More specifically, the object of the invention focuses on equipment for climatizing swimming pool water that, in a novel manner, comprises the incorporation of at least one high-yield solar collector through which the water of the swimming pool is heated by making it pass, propelled by a pump provided for said purposes, through a closed pipe circuit housed in said collector, said pump being actuated through a controller connected to the pump that starts it based on the readings of a temperature probe, enabling the swimming pool water to be heated and entailing important energy savings as compared to the equipment that other known climatization systems use.

### FIELD OF APPLICATION OF THE INVENTION

The field of application of the present invention falls within the sector of the industry dedicated to the installation of swimming pools and, more specifically, to the manufacturing and installation of climatization systems for both private and public swimming pools.

### BACKGROUND OF THE INVENTION

In reference to the current state of the art, it should be mentioned that, at least as far as the applicant is concerned, they are not aware of the existence of any other equipment for climatizing swimming pool water having technical, structural and constituent characteristics similar to those of the invention advocated herein, as claimed.

As a matter of fact, climatization systems for swimming pool water usually consist of heating pumps that practically operate all day and night in order to achieve a stable temperature of said water, such that the electric energy consumption thereof tends to be very high, especially in winter months, when the water temperature is colder due to the lower ambient temperature.

The objective of the present invention is to therefore develop improved climatization equipment that, by taking advantage of solar energy, enables swimming pool water to be heated to the desired temperature and with hardly any energy consumption, since this only applies to the actuation of the pump that makes the water pass through said equipment, but not to achieving the temperature thereof.

### DESCRIPTION OF THE INVENTION

The equipment for climatizing swimming pool water that the invention proposes is configured as a notable novelty within the field of application thereof, since in light of the implementation thereof and in an exhaustive manner, the aforementioned objectives are met satisfactorily, the characterizing details that make it possible and set it apart from that which is already known being conveniently established in the final claims that accompany the present description.

Specifically, the equipment of the invention comprises at least one solar collector made up of a pipe circuit through which the water from the swimming pool is made to circulate and which are housed in a watertight panel made up of a frame between an aluminum sheet and a plywood plate joined to a sheet of solar glass.

Said solar collector or collectors are placed in the outer portion of the installation of the swimming pool, since it can be covered or not, with the necessary inclination to receive the greatest amount of sun possible, preferably facing south when the installation is in the northern hemisphere. Then two pipes are connected to them that go from the machine room of the swimming pool to where the collectors are located, one to feed water to the collectors and another to return it back to the swimming pool.

The swimming pool water is sent to the solar collector by means of a pump provided to this effect when a temperature probe provided in said collector, upon reaching the previously programmed degrees of temperature, orders a solar controller installed with the pump in the machine room to start up, sending the cold water from the swimming pool to the inlet of the solar collector where it is heated.

Preferably, by means of a second temperature probe located in the inlet of the pump, when it detects that the temperature has risen to the target value, it orders the solar controller to stop the pump again.

With this, the equipment is actuated periodically, starting operations only for a certain period each time which will depend, on one hand, on the values programmed in the temperature sensors for said actuation and, on the other hand, on the ambient temperature, since, logically, the climatization of the water will not be the same in winter as in summer, nor in one location or another.

In any case, it is clear that much electricity would be saved since until now the majority of pools are heated with heat pumping means that practically operate all day and night, and therefore, the consumption thereof is very high, while with the described equipment the desired temperature is achieved with less consumption, since it only requires occasional and periodic actuation of the force pump of water.

The collector of the recommended equipment, upon having special pipes that are resistant to sunlight in a flat, open circuit and with help from the sheet of tempered glass and the black background, in addition to the rest of the elements, ensures that the suitable temperature is efficiently reached, something that other collectors existing on the market do not do, without the need for support systems in the summer months and maybe not even in the winter.

In light of the foregoing, it is seen that the described equipment for climatizing swimming pool water represents an innovative structure with structural and constituent characteristics heretofore unknown for their intended purpose, reasons which, taken together with its usefulness, provide it with sufficient grounds for obtaining the requested exclusivity privilege.

### DESCRIPTION OF THE DRAWINGS

As a complement to the present description, and for the purpose of helping to make the characteristics of the invention more readily understandable, this specification is accompanied by a page of drawings, as an integral part thereof, which, by way of illustration and not limitation, represent the following:
Figure number 1 shows a schematic view of an exemplary embodiment of the equipment for climatizing swimming pool water, object of the invention, showing the main parts and elements that it comprises, as well as the configuration and arrangement thereof.
Figure number 2 shows a cross-sectional view of an example of the at least one solar collector that the equipment of the invention comprises, showing the main parts and elements that it comprises.

### PREFERRED EMBODIMENT OF THE INVENTION

In light of the mentioned figures, and according to the numbering adopted, a preferred, but not limiting, exemplary embodiment of the equipment for climatizing swimming pool water object of the invention is shown, which comprises the parts and elements that are indicated and described in detail below.

Thus, as seen in said figures, the equipment (1) in question is essentially configured from at least one solar collector (2) made up of a panel with a pipe circuit (3) through which the swimming pool water (4) is made to circulate by means of the actuation of a force pump (5) that is preferably connected to an electronic controller (6) linked, in turn, to at least a first temperature sensor (7) incorporated in said collector (2), such that upon detecting that the temperature of the water that circulates through said pipes (3) reaches a certain pre-established value, it causes the controller (6) to activate by actuating the pump (5) in order to make the swimming pool water circulate through said tubes (3) of the collector (2) or collectors determining the heating thereof.

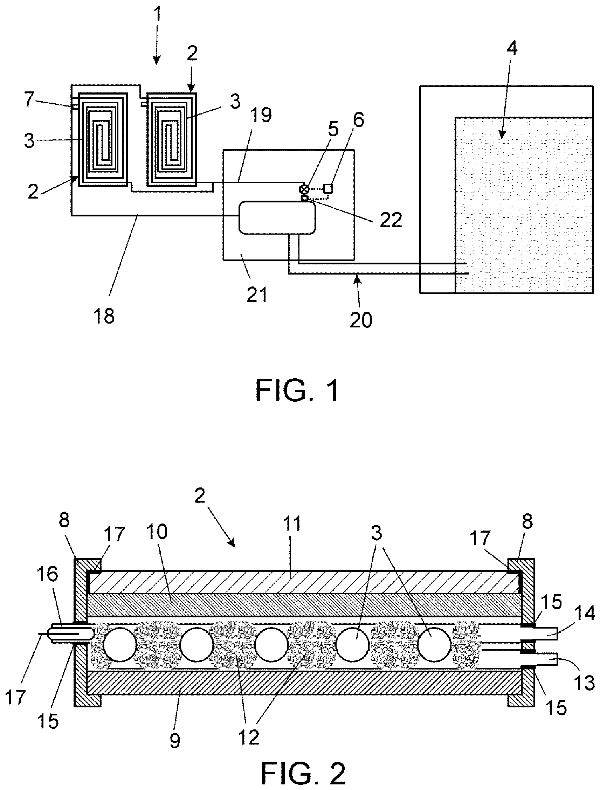

Preferably, each collector (2) is a panel, as shown by Figure 2, formed by an aluminum frame (8) that encloses a lower aluminum sheet (9) and an upper plywood plate (10), painted in glossy black and joined to a sheet of tempered solar glass (11), the pipe circuit (3) being housed therebetween on a glass wool insulating filling (12), an inlet (13) and an outlet (14) of the pipe circuit (3) being located in respective pass-pipe gaskets (15).

Logically, when the equipment (1) has more than one collector (2), the pipe circuits (3) thereof are installed in series. In any case, the inlet (13) is preferably arranged in the lower portion of the panel that consists of a collector (2) and the outlet (14) in the upper portion, making the pipe circuit (3) have a rectangular spiral configuration by means of the incorporation of the corresponding elbows, in order to cover as much surface as possible and envisaging, preferably in the opposite end of the cited mouths, a T-shaped connection where a case (16) is assembled for the incorporation of the aforementioned temperature sensor (7), which, in the case of there being more than one collector (2), only one is incorporated. Said connection with the case (16) is also incorporated through a pass-pipe gasket (15), while the incorporation of a perimeter gasket (17) is provided to join the sheet of tempered glass (11) and the frame (8) so that the equipment is perfectly watertight.

Furthermore, the upper plywood plate (10) is preferably resistant to water, for example, made of mahogany or similar, and painted in a glossy black.

The collector or collectors (2), which are placed on the outside of the installation with the optimal inclination in order to receive the greatest amount of sunlight possible, are connected by means of corresponding feed pipes (18) and return pipes (19) to the water purification circuit (20) of the machine room (21) of the swimming pool (4), where the force pump (5) controlled by the controller (6) is also incorporated, preferably consisting of a programmable electronic device, and a second temperature sensor (22) preferably with it, likewise connected to said controller (6), that determines the stopping of the operations thereof upon reaching the determined water temperature value.

Having thus adequately described the nature of the present invention, as well as how to put it into practice, it is deemed unnecessary to make this description any longer in order for anyone skilled in the art to understand the scope of the invention and the advantages deriving therefrom. It must be noted that, within its essential nature, the invention may be carried out according to other embodiments differing in detail from that set out by way of example, which the protection sought would equally cover, provided that the fundamental principle thereof is not altered, changed or modified.

## Claims

1. EQUIPMENT FOR CLIMATIZING SWIMMING POOL WATER, **characterized in that** it comprises, at least one solar collector (2), made up of a panel with a pipe circuit (3) through which the water from the swimming pool (4) is made to circulate, a force pump (5), the actuation of which causes said circulation, an electronic controller (6) that regulates the actuation of the pump (5) and, at least one first temperature sensor (7) incorporated in said collector (2) and connected to the controller (6), such that upon detecting that the temperature of the water that circulates through the pipes (3) reaches a certain pre-established value, it causes the controller (6) to activate by actuating the pump (5) in order to make the swimming pool water circulate through said tubes (3).

2. THE EQUIPMENT FOR CLIMATIZING SWIMMING POOL WATER according to claim 1, **characterized in that** each collector (2) is a panel formed by an aluminum frame (8) that encloses a lower aluminum sheet (9) and an upper plywood plate (10), which is joined to a sheet of tempered solar glass (11), the pipe circuit (3) being housed therebetween on a glass wool insulating filling (12), an inlet (13) and an outlet (14) of the pipe circuit (3) being located in respective pass-pipe gaskets (15).

3. THE EQUIPMENT FOR CLIMATIZING SWIMMING POOL WATER according to claim 2, **characterized in that** the inlet (13) is arranged in the lower portion of the panel that consists of a collector (2) and the outlet (14) in the upper portion.

4. THE EQUIPMENT FOR CLIMATIZING SWIMMING POOL WATER according to claim 2 or 3, **characterized in that** the pipe circuit (3) has a spiral configuration.

5. THE EQUIPMENT FOR CLIMATIZING SWIMMING POOL WATER according to any of claims 1 to 4, **characterized in that** a T-shaped connection is provided in the pipe circuit (3), where a case (16) is assembled for the incorporation of the temperature sensor (7).

6. THE EQUIPMENT FOR CLIMATIZING SWIMMING POOL WATER according to any of claims 1 to 5, **characterized in that** the collector or collectors (2) are connected by means of corresponding feed pipes (18) and return pipes (19) to the water purification circuit (20) of the machine room (21) of the swimming pool (4), where the force pump (5) controlled by the controller (6) is also incorporated.

7. THE EQUIPMENT FOR CLIMATIZING SWIMMING POOL WATER according to any of claims 1 to 6, **characterized in that** it comprises the existence, together with the force pump (5), of a second temperature sensor (22) that, also connected to the controller (6), determines the stopping of the operations thereof upon reaching the determined water temperature value.
